# EUROPEAN PATENT APPLICATION

(11) **EP 4 706 870 A1**
(43) Date of publication of application: **11.03.2026**
(21) Application number: 24876679.2
(22) Date of filing: 12.10.2024
(51) Int. Cl.: B23K 26/362, B23K 26/16

(54) **CONTROL METHOD FOR LASER BEAM MACHINING DEVICE, AND LASER BEAM MACHINING SYSTEM**

(30) Priority: 12.10.2023 CN 202311326902; 20.08.2024 CN 202411145646
(71) Applicant: Makeblock Co., Ltd., Shenzhen, Guangdong 518000 (CN)
(72) Inventor: WANG, Binquan, Shenzhen, Guangdong 518000 (CN)
(74) Representative: Patentanwaltskanzlei Matschnig & Forsthuber OG
(86) International application number: PCT/CN2024/124412
(87) International publication number: WO 2025/077874

(57) **Abstract**

The present application provides a control method for a laser beam machining device, and a laser beam machining system. The laser beam machining system (100) comprises a laser beam machining device (1) and a gas pump (2), a gas outlet passage connected to the gas pump (2) is arranged in the laser beam machining device (1), and the gas pump (2) is in communicational connection with the laser beam machining device (1). The control method for the laser beam machining device (1) comprises the following steps: (S10) obtaining machining task information and gas pump configuration information of the gas pump (2); (S20) on the basis of the machining task information, starting a laser beam machining procedure and synchronously starting the gas pump; and (S30) on the basis of the machining task information and the gas pump configuration information, outputting a gas pump adjustment instruction to the gas pump (2) to adjust the gas outlet amount of the gas pump (2) in a laser beam machining process.

## Description

### CROSS REFERENCE TO RELATED APPLICATIONS

This application claims the priority to Chinese Patent Application No. 202311326902.X, titled "CONTROL METHOD FOR LASER BEAM MACHINNG SYSTEM, AND LASER BEAM MACHINING SYSTEM", filed on October 12, 2023, and the priority to Chinese Patent Application No. 202411145646.9, titled "CONTROL METHOD FOR LASER BEAM MACHINNG DEVICE, AND LASER BEAM MACHINING SYSTEM", filed on August 20, 2024 with the China National Intellectual Property Administration, both of which are incorporated herein by reference in their entireties.

### FIELD

The present disclosure relates to the technical field of laser processing, and particularly to a control method for a laser processing apparatus, and a laser processing system.

### BACKGROUND

During laser processing such as laser engraving and laser cutting, the generation of dust is inevitable. If the dust adheres to a laser mirror surface, it may interfere with laser emission and adversely affect the processing quality.

In the conventional technology, an air pump is provided to blow away the dust during laser processing, to mitigate or prevent dust adhesion on the laser mirror surface. However, this method is inconvenient to operate and the air-blowing effect is poor.

### SUMMARY

A control method for a laser processing apparatus, and a laser processing system are provided according to the present disclosure, aiming to achieve a good air-blowing dust removal effect during laser processing.

A control method for a laser processing apparatus is provided according to the present disclosure. The control method for a laser processing apparatus includes:
acquiring processing task information and air pump configuration information of an air pump;
starting a laser processing operation based on the processing task information and synchronously activating the air pump; and
outputting an air pump adjustment instruction to the air pump based on the processing task information and the air pump configuration information, to adjust an air flow rate of the air pump during laser processing.

A laser processing system is further provided according to the present disclosure. The laser processing system includes a laser processing apparatus and an air pump. The laser processing apparatus includes an air supply channel connected to the air pump. The air pump is communicatively connected to the laser processing apparatus. The laser processing apparatus is configured to perform the control method for the laser processing apparatus described above to output the air pump adjustment instruction to the air pump. The air pump adjusts the air flow rate based on the air pump adjustment instruction.

A control method for a laser processing system is further provided according to the present disclosure. The laser processing system includes a laser processing apparatus. The control method for a laser processing system includes:
during laser processing, performing, by the laser processing apparatus, processing based on processing task information, and synchronously outputting an air pump adjustment instruction to an air pump based on air pump configuration information of the air pump to synchronously adjust an air flow rate of the air pump.

A computer-readable storage medium is further provided according to the present disclosure. The computer-readable storage medium stores a computer program. The computer program is executed by a processor to perform the control method for a laser processing apparatus described above.

A laser processing device is further provided according to the present disclosure. The laser processing device includes a laser processing apparatus and an air pump as described above, and includes at least one processor and a memory. The at least one processor is configured to process a computer program stored in the memory, to perform the control method for a laser processing apparatus described above.

The technical solutions of the present disclosure enable the air pump to automatically adjust the air flow rate of the air pump based on a laser processing task, ensuring that the air pump can deliver sufficient airflow to blow away dust when different processing materials, different processing patterns or different laser processing parameters are employed for processing, and thereby mitigating or preventing dust adhesion on a laser mirror surface. Manual control and adjustment for the air pump are eliminated, improving the convenience for controlling the air pump and achieving automation. Furthermore, a continuous high air flow rate of the air pump during laser processing is avoided, preventing excessive energy consumption and resource waste.

### BRIEF DESCRIPTION OF THE DRAWINGS

To clearly illustrate embodiments of the present disclosure or technical solutions in the conventional technology, the drawings referred to for describing the embodiments or the conventional technology are briefly described below. Apparently, the drawings in the following description show merely some embodiments of the present disclosure, and for those skilled in the art, other drawings may be obtained based on the structures shown in the provided drawings without any creative effort.
FIG. 1 is a schematic diagram of a laser processing system according to some embodiments of the present disclosure;
FIG. 2 is a flowchart of a control method for a laser processing system according to some embodiments of the present disclosure;
FIG. 3 is a flowchart of a control method for a laser processing apparatus according to some embodiments of the present disclosure;
FIG. 4 is a flowchart of a control method for a laser processing apparatus according to some embodiments of the present disclosure;
FIG. 5 is a flowchart of a control method for a laser processing apparatus according to some embodiments of the present disclosure;
FIG. 6 is a flowchart of a control method for a laser processing apparatus according to some embodiments of the present disclosure; and
FIG. 7 is a schematic structural diagram of an electronic device according to some embodiments of the present disclosure.

Reference numerals are as follows:

| | | | |
|---|---|---|---|
| 100: | Laser processing system, | 1: | Laser processing apparatus, |
| 2: | Air pump, | 3: | Host computer, |
| 4: | Server. | | |

Objectives, functional characteristics and advantages of the present disclosure are further described in conjunction with the embodiments and with reference to the drawings.

### DETAILED DESCRIPTION

Hereinafter technical solutions in the embodiments of the present disclosure are described clearly and completely in conjunction with the drawings in the embodiments of the present disclosure. Apparently, the described embodiments are only some embodiments, rather than all the embodiments of the present disclosure. All the other embodiments obtained by those skilled in the art based on the embodiments in the present disclosure without any creative effort fall within the protection scope of the present disclosure.

It should be noted that all directional indications (such as up, down, left, right, front, and back) in the embodiments of the present disclosure are only used to explain relative position relationships, movements, or the like between components in a particular posture (as shown in the drawings). If the particular posture changes, the directional indications change accordingly.

In the present disclosure, unless clearly specified or defined otherwise, the terms such as "connection" and "fixation" should be understood in a broad sense. For example, "fixation" may be a fixed connection, a detachable connection, or connection as an integral, may be a mechanical connection or an electrical connection, may be a direct connection, an indirect connection via an intermediate medium, or internal communication between two components or interaction relationship between two components, unless clearly defined otherwise. Those skilled in the art should understand specific meanings of the above terms in the present disclosure based on specific situations.

In addition, in the present disclosure, descriptions related to "first" and "second" are only used for descriptive purposes, and should not be understood as indicating or implying the relative importance or implicitly indicating the number of the technical features. Therefore, a feature defined with "first" and "second" may explicitly or implicitly include at least one of the features. In addition, the technical solutions across the various embodiments can be combined with each other, provided that those skilled in the art are capable of carrying out the combination of technical solutions. If the combination of technical solutions is contradictory or cannot be carried out, it should be considered that such a combination of technical solutions does not exist and is not within the protection scope of the present disclosure.

During laser processing such as laser engraving and laser cutting, the generation of dust is inevitable. If the dust adheres to a laser mirror surface, it may interfere with laser emission and adversely affect the processing quality.

In the related technology, an air pump is provided to blow away the dust during laser processing, to mitigate or prevent dust adhesion on the laser mirror surface. However, during the laser processing, due to different processing materials and changes in processing parameters such as a laser processing power and a processing speed, the amount of dust generated during processing changes accordingly. At present, an air flow rate of the air pump can only be adjusted by manually and mechanically selecting an operating level of the air pump to enable the air pump to purify the generated smoke dust and particulates relatively effectively, which results in significant operational inconvenience.

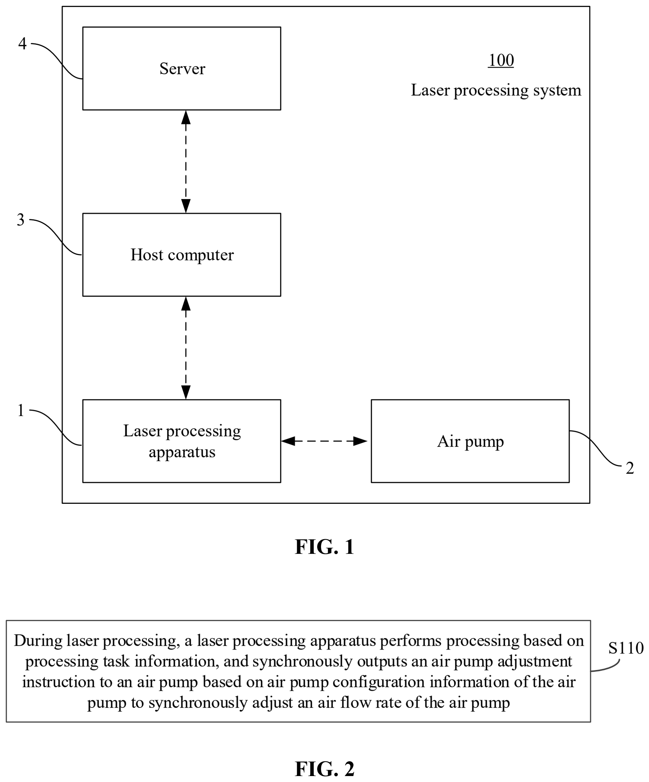

To address the above issues, a control method for a laser processing apparatus 1 is provided according to the present disclosure, which is applied to a laser processing system 100. Referring to FIG. 1, the laser processing system 100 includes the laser processing apparatus 1 and an air pump 2. The laser processing apparatus 1 may be, but is not limited to, a laser engraving machine, a laser cutting machine, a laser marking machine, a laser welding machine, and the like. The laser processing apparatus 1 includes an air supply channel connected to the air pump 2. The air pump 2 is communicatively connected to the laser processing system 100. The air pump 2 blows air during laser processing to mitigate or prevent dust adhesion on the laser mirror surface, thereby avoiding adverse influences on laser emission and laser processing quality, and reducing or eliminating the effect of smoke generated during the processing. The laser processing apparatus 1 performs the control method provided in the present disclosure to output an air pump adjustment instruction to the air pump 2, enabling the air pump 2 to adjust an air flow rate during a processing task executed by the laser processing apparatus 1 based on the air pump adjustment instruction.

In some embodiments, the laser processing apparatus 1 may be, but is not limited to, a laser engraving machine, a laser cutting machine, a laser marking machine, a laser welding machine, and the like. The laser processing apparatus 1 executes the processing task based on processing task information. The processing task information includes a processing material, a processing pattern, a processing start time instant, a processing end time instant, a processing power, a processing speed, and the like. The processing pattern only includes a processing contour, or includes an engraving depth, a thickness of a cut material, and the like. In a same laser processing task, both laser cutting and laser engraving are simultaneously included. The processing power and the processing speed are specific values or numerical ranges. The processing power and the processing speed are determined based on the processing material and the processing pattern, or are set and adjusted based on user requirements.

Air pump configuration information includes a correspondence between the air flow rate of the air pump and at least one parameter such as an operating power of the air pump 2, a piston stroke of the air pump 2, a rotational speed of a crankshaft, and a flow rate, or includes a mapping relationship between an operating level of the air pump 2 and the air flow rate of the air pump, that is, the air flow rate of the air pump corresponding to the operating level is set in advance. The air pump configuration information is directly preconfigured in the laser processing apparatus 1, or transmitted to the laser processing apparatus 1 by a host computer 3, or downloaded from a server 4 to the laser processing apparatus 1.

The air pump 2 is configured with both air extraction and air exhaust functions. An air exhaust port of the air pump 2 is connected to the air supply channel in the laser processing apparatus 1. An air outlet end of the air supply channel is arranged adjacent to a laser-emitting head, to blow air towards an area aligned with the laser-emitting head. Alternatively, in some embodiments, the air supply channel is communicated with a laser-emitting path, to blow airflow outward directly from a laser-output port. The air pump 2 is communicatively connected to the laser processing apparatus 1 via a wired connection or a wireless connection, for example, a Bluetooth connection or a connection manner that both the air pump 2 and the laser processing apparatus 1 are connected to a same local area network, enabling signal transmission between the air pump 2 and the laser processing apparatus 1, and allowing the laser processing apparatus 1 to transmit a control instruction to the air pump 2.

In some embodiments, the laser processing system 100 includes a host computer 3. The host computer 3 transmits the processing task information and the air pump configuration information to the laser processing apparatus 1. The host computer 3 is a terminal device such as a mobile phone, a computer, or a tablet. The host computer 3 is provided with host computer software for receiving or preconfiguring the laser processing task information and the air pump configuration information. In some embodiments, the host computer 3 is configured to monitor a laser processing operation, an operating state of the air pump 2, and the like, which is not limited herein. In some embodiments, the host computer 3 is communicatively connected to the laser processing apparatus 1 via a wired connection through a signal wire, or via a wireless connection by using Bluetooth or by connecting to the same local area network, enabling the host computer 3 to transmit the laser processing task information, the air pump configuration information, and the like to the laser processing apparatus 1. In some embodiments, the laser processing apparatus 1 transmits actual processing information to the host computer 3 only for feedback and storage.

The processing task information and the air pump configuration information in the host computer 3 are directly configured in the host computer 3 by a user or automatically generated by software. The processing task information and the air pump configuration information are further modified in the host computer 3. In some embodiments, the laser processing system 100 further includes a server 4. The server 4 is configured to store data, such as an apparatus parameter of the laser processing apparatus 1, a processing parameter, and a configuration parameter of the air pump 2. The host computer 3 acquires required data information from the server 4, and uploads the data information to the server 4 for storage.

Referring to FIG. 2, in some embodiments of the present disclosure, a control method for a laser processing system includes step S110.

In step S110, during laser processing, the laser processing apparatus performs processing based on processing task information, and synchronously outputs an air pump adjustment instruction to an air pump based on air pump configuration information of the air pump to synchronously adjust an air flow rate of the air pump.

During laser processing, due to different processing tasks for the laser processing apparatus, such as different processing powers, different processing speeds, different processing materials, and different processing operations (for example, engraving and cutting at different positions separately), and a difference in an engraving depth, a cutting thickness or a cut width of a desired product pattern or shape, the amount of dust generated during the processing varies. Thus, the air flow rate of the air pump is to be adjusted. In a case that a large amount of dust is generated during laser processing but the air flow rate of the air pump is low, a problem of failing to effectively blow away the dust is prone to occur. In a case that the air pump is kept to output a continuous high air flow rate, a problem of energy waste occurs when less dust is generated, resulting in high energy consumption. For example, as the processing power increases during laser processing, more laser light is emitted during processing, the laser energy becomes stronger, and consequently, more dust is generated. As the processing speed decreases during laser processing, that is, a dwell time at a processing position becomes longer, more laser light is emitted at the processing position, and more dust is generated.

Therefore, the laser processing apparatus is required to synchronously output the air pump adjustment instruction to the air pump based on the air pump configuration information of the air pump corresponding to a current executed processing task in real time, to synchronously adjust the air flow rate of the air pump. In this way, the air pump automatically adjusts its air flow rate based on the laser processing task, ensuring that the air pump can deliver sufficient airflow to blow away dust when different processing materials, different processing patterns or different laser processing parameters are employed for processing, and thereby mitigating or preventing dust adhesion on a laser mirror surface. Manual control and adjustment for the air pump are eliminated, improving the convenience for controlling the air pump and achieving automation. Furthermore, a continuous high air flow rate of the air pump during laser processing is avoided, preventing excessive energy consumption and resource waste.

In some embodiments, the processing task information and the air pump configuration information are directly preconfigured in the laser processing apparatus. Alternatively, the processing task information and the air pump configuration information are transmitted to the laser processing apparatus by the host computer. Alternatively, the processing task information and the air pump configuration information are downloaded from the server to the laser processing apparatus.

In some embodiments, the processing task information includes a processing pattern, a processing material, a processing speed, and a processing power. The air pump adjustment instruction is acquired by:
calculating a required air flow rate of the air pump based on at least one of the processing material, the processing speed, and the processing power; and determining the air pump adjustment instruction based on the required air flow rate and the air pump configuration information.

In some embodiments, the air pump configuration information includes a correspondence between the air flow rate of the air pump and at least one parameter such as an operating power of the air pump, a piston stroke of the air pump, a rotational speed of a crankshaft, and a flow rate, or includes a mapping relationship between an operating level of the air pump and the air flow rate of the air pump, that is, the air flow rate of the air pump corresponding to the operating level is set in advance. Therefore, the air flow rate of the air pump is controlled based on parameters such as a type of the air pump, the operating power of the air pump, the piston stroke of the air pump, and the rotational speed of the crankshaft. The air pump is provided with the operating level in advance, and is provided with the air flow rate corresponding to the operating level. The air flow rate of the air pump is adjusted by selecting and switching the operating level of the air pump based on the mapping relationship between the operating level and the air flow rate of the air pump, which facilitates the control operation.

In some embodiments, the calculating a required air flow rate of the air pump based on at least one of the processing material, the processing speed, and the processing power includes:
acquiring a current processing power, and determining the required air flow rate based on a mapping relationship between the current processing power and the air flow rate of the air pump; or
acquiring a current processing speed, and determining the required air flow rate based on a mapping relationship between the current processing speed and the air flow rate of the air pump; or
acquiring the current processing power and the current processing speed, and determining the required air flow rate based on the mapping relationship between the current processing power and the air flow rate of the air pump, and the mapping relationship between the current processing speed and the air flow rate of the air pump; or
determining the required air flow rate based on a mapping relationship between the processing material and the air flow rate of the air pump; or
acquiring the current processing power and the current processing speed, and determining the required air flow rate based on the mapping relationship between the current processing power and the air flow rate of the air pump, the mapping relationship between the current processing speed and the air flow rate of the air pump, and the mapping relationship between the processing material and the air flow rate of the air pump.

Therefore, in the technical solutions of the present disclosure, the air pump automatically adjusts its air flow rate based on the laser processing task, ensuring that the air pump can deliver sufficient airflow to blow away dust when different processing materials, different processing patterns or different laser processing parameters are employed for processing, and thereby mitigating or preventing dust adhesion on a laser mirror surface. Manual control and adjustment for the air pump are eliminated, improving the convenience for controlling the air pump and achieving automation. Furthermore, a continuous high air flow rate of the air pump during laser processing is avoided, preventing excessive energy consumption and resource waste.

In some embodiments, the air pump configuration information at least includes an operating level of the air pump and the air flow rate of the air pump corresponding to the operating level.

The outputting the air pump adjustment instruction to the air pump based on the required air flow rate and the air pump configuration information, to adjust the air flow rate of the air pump includes:
determining a target operating level of the air pump based on the required air flow rate and the air pump configuration information; and
outputting the air pump adjustment instruction including the target operating level to the air pump to control the air pump to switch to the target operating level, to adjust the air flow rate of the air pump.

In some embodiments, the acquiring the current processing power and the current processing speed, and determining the required air flow rate based on a mapping relationship between the current processing power and the air flow rate of the air pump, and a mapping relationship between the current processing speed and the air flow rate of the air pump includes:
acquiring a first air flow rate based on a mapping relationship between a power range in which the current processing power is located and the air flow rate of the air pump;
acquiring a second air flow rate based on a mapping relationship between a speed range in which the current processing speed is located and the air flow rate of the air pump; and
determining a larger one of the first air flow rate and the second air flow rate as the required air flow rate, or determining an average of the first air flow rate and the second air flow rate as the required air flow rate, and adjusting the air flow rate of the air pump to the required air flow rate.

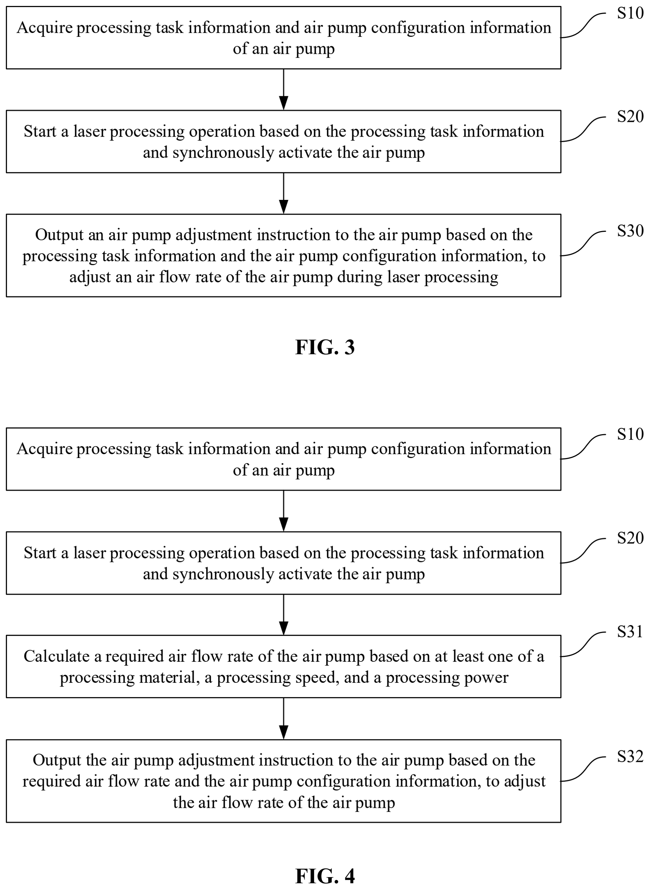

Referring to FIG. 3, in some embodiments of the present disclosure, a control method for a laser processing apparatus includes the following steps S10 to S30.

In step S10, processing task information and air pump configuration information of an air pump are acquired.

In step S20, a laser processing operation is started based on the processing task information and the air pump is synchronously activated.

The laser processing apparatus starts the laser processing operation for processing based on the processing task information. The processing is immediately started upon receiving a laser processing task, or is started at a preset time instant according to a configured processing start time instant. When the laser processing apparatus starts executing a processing task, the air pump is synchronously activated to perform an air-blowing operation without additional manual control, thus reducing manual involvement and improving the degree of automation. Furthermore, it is ensured that the air-blowing operation is synchronously performed by a laser processing system in response to starting the laser processing task, preventing delayed start of the air pump that may cause dust generated during initial processing to adhere to the laser mirror surface and affect processing quality. In step S20, the laser processing apparatus detects whether the air pump is in communication connection. If the air pump is not in communication connection, a prompt is sent, to remind the user to connect the air pump to the network, thereby avoiding a case that the laser processing apparatus fails to control the synchronous start of the air pump.

In step S30, an air pump adjustment instruction is outputted to the air pump based on the processing task information and the air pump configuration information, to adjust an air flow rate of the air pump during laser processing.

In some embodiments of the present disclosure, the laser processing apparatus adjusts the air flow rate of the air pump based on the processing task information and the air pump configuration information, such that the air pump delivers an appropriate airflow corresponding to the amount of the generated dust to remove the dust. For example, when the processing power increases during laser processing, more smoke and dust are generated, and thus, the air flow rate of the air pump should be increased to achieve a better dust removal effect. On the contrary, when the processing power decreases during laser processing, less smoke and dust are generated, and thus, the air flow rate of the air pump should be decreased to lower energy consumption of the air pump. Alternatively, when the processing speed decreases during laser processing, more smoke and dust are generated, and thus, the air flow rate of the air pump should be increased to achieve a better dust removal effect. On the contrary, when the processing speed increases during laser processing, less smoke and dust are generated, and thus, the air flow rate of the air pump should be decreased to lower energy consumption of the air pump. That is, the laser processing system automatically adjusts the air flow rate of the air pump based on the laser processing task, to maintain a good dust removal effect during the processing and avoid excessive energy consumption. In addition, manual control and adjustment for the air pump are eliminated, improving control convenience and achieving automation.

In some embodiments of the present disclosure, the control method for a laser processing apparatus further includes: turning off the air pump after completing the laser processing task.

After the laser processing apparatus finishes processing a workpiece, the air pump is turned off. The air pump is automatically turned off upon detecting that the laser processing apparatus finishes the processing, with options for either immediate shutdown or delayed shutdown, which is conducive to enhancing operational convenience of the air pump, reducing manual involvement, and improving the degree of automation.

In some embodiments of the present disclosure, the processing task information includes a processing pattern, a processing material, a processing speed, and a processing power.

The processing task information is reference information for guiding the processing of the laser processing apparatus. The processing task information includes a processing material, a processing pattern for engraving and cutting, a processing start time instant, a processing end time instant, a processing power, a processing speed, and processing powers and processing speeds at different processing stages. The processing power and the processing speed are specific values or numerical ranges. The processing power and the processing speed are determined based on the processing material and the processing pattern, or are set and adjusted based on user requirements.

In some embodiments of the present disclosure, a mapping relationship between the processing task information and the air flow rate in each operating mode is determined in advance, and the air flow rate is adjusted based on the operating mode. That is, the mapping relationship between the processing task information and the required air flow rate varies in different operating modes. Step S30 includes: acquiring a current operating mode, acquiring a mapping relationship between the processing task information and the required air flow rate based on the current operating mode, determining the required air flow rate based on the mapping relationship, generating an adjustment instruction corresponding to the required air flow rate, and adjusting the air flow rate of the air pump during laser processing. For example, the operating mode includes a cutting mode and an engraving mode, and the required air flow rate varies in the cutting mode and in the engraving mode. In the cutting mode, a first mapping relationship between the processing task information and the air flow rate is pre-established. In the engraving mode, a second mapping relationship between the processing task information and the air flow rate is pre-established. In response to the current operating mode being the cutting mode, a first required air flow rate corresponding to the processing task information is acquired based on the first mapping relationship, the air pump adjustment instruction is generated based on the first required air flow rate, and the air pump adjustment instruction is transmitted to the air pump to control the air pump to output an air flow rate equal to or greater than the first required air flow rate. In response to the current operating mode being the engraving mode, a second required air flow rate corresponding to the processing task information is acquired based on the second mapping relationship, the air pump adjustment instruction is generated based on the second required air flow rate, and the air pump adjustment instruction is transmitted to the air pump to control the air pump to output an air flow rate equal to or greater than the second required air flow rate. In different operating modes, the logic for outputting the air pump adjustment instruction based on the processing task information and the air pump configuration information remains substantially consistent.

Referring to FIG. 4, in some embodiments of the present disclosure, the outputting an air pump adjustment instruction to the air pump based on the processing task information and the air pump configuration information, to adjust an air flow rate of the air pump during laser processing in step S30 includes the following steps S31 to S32.

In step S31, a required air flow rate of the air pump is calculated based on at least one of a processing material, a processing speed, and a processing power.

In step S32, the air pump adjustment instruction is outputted to the air pump based on the required air flow rate and the air pump configuration information, to adjust the air flow rate of the air pump.

In some embodiments, the laser processing apparatus adjusts the air flow rate of the air pump based on the processing task information. The required air flow rate of the air pump is determined by performing a comprehensive calculation based on all parameters included in the processing task information, or the required air flow rate is determined based on some of the processing parameters included in the processing task information, for example, the required air flow rate is determined based on one, two, or more of the processing parameters. After the required air flow rate is determined, the laser processing apparatus generates the air pump adjustment instruction based on the air pump configuration information and the required air flow rate, and outputs the air pump adjustment instruction to the air pump to adjust the air flow rate of the air pump to the required air flow rate. For example, in the following embodiments, the air flow rate of the air pump is adjusted based on only one of the processing parameters such as the processing power, the processing speed, and the processing material, or at least two parameters are acquired and the air flow rate of the air pump is adjusted based on mapping relationships between the acquired parameters and the air flow rate of the air pump. Specific implementations shall refer to the following embodiments, which will not be repeated here.

In some embodiments, the air flow rate of the air pump is adjusted through at least two operating levels of the air pump. The air flow rate of the air pump varies when the air pump operates at different operating levels. A target operating level of the air pump is determined based on the determined required air flow rate, to cause the air pump to operate at the target operating level. In this case, the air pump adjustment instruction includes the operating level of the air pump. In addition, stepless adjustment is performed on the air pump. For example, by using pulse width modulation (PWM), the air flow rate of the air pump is adjusted by changing a power supply frequency and a voltage of an air pump motor, enabling the air pump to output any required air flow rate within a specified range, and accurately matching the air flow rate of the air pump with the amount of the generated dust. In this case, the air pump adjustment instruction includes an operating voltage, a current, a frequency, and a duty cycle of the air pump.

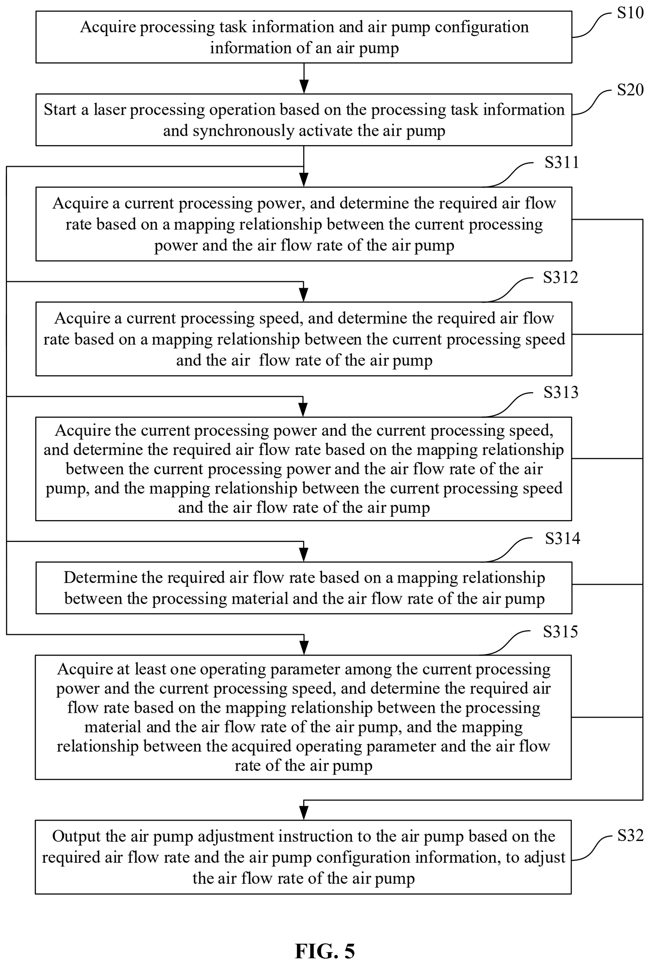

Referring to FIG. 5, in some embodiments of the present disclosure, the calculating a required air flow rate of the air pump based on at least one of a processing material, a processing speed, and a processing power in step S31 includes step S311.

In step S311, a current processing power is acquired, and the required air flow rate is determined based on a mapping relationship between the current processing power and the air flow rate of the air pump.

In the embodiments, the air flow rate of the air pump is adjusted based on the processing power of the laser processing apparatus. In some embodiments, the required air flow rate is calculated based on a specific value of the processing power, or is acquired based on a power range in which the current processing power is located, and a mapping relationship between the power range and the air flow rate of the air pump. For example, at least two power ranges are set in advance, and the air flow rate of the air pump corresponding to each power range is set. The air pump is provided with at least two operating levels. The power range in which the processing power of the laser processing apparatus is located is determined in real time or at predetermined time intervals. Alternatively, when the processing power changes, the power range in which the changed processing power is located is determined. Then, the required air flow rate is acquired based on the mapping relationship between the power range and the air flow rate of the air pump. After the required air flow rate is determined, the laser processing apparatus generates an air pump adjustment instruction based on the air pump configuration information and the required air flow rate, and outputs the air pump adjustment instruction to the air pump to adjust the air flow rate of the air pump to the required air flow rate, thereby matching the air flow rate of the air pump with the current processing power, and ensuring that the air pump delivers an appropriate airflow for an effective air-assisted operation.

Referring to FIG. 5, in some embodiments of the present disclosure, the calculating a required air flow rate of the air pump based on at least one of a processing material, a processing speed, and a processing power in step S31 includes step S312.

In step S312, a current processing speed is acquired, and the required air flow rate is determined based on a mapping relationship between the current processing speed and the air flow rate of the air pump.

In the embodiments, the air flow rate of the air pump is adjusted based on the processing speed of the laser processing apparatus. In some embodiments, the required air flow rate is calculated based on a specific value of the processing speed, or is acquired based on a speed range in which the current processing speed is located, and a mapping relationship between the speed range and the air flow rate of the air pump. For example, at least two speed ranges are set in advance, and the air flow rate of the air pump corresponding to each speed range is set. The air pump is provided with at least two operating levels. The speed range in which the processing speed of the laser processing apparatus is located is determined in real time or at predetermined time intervals. Alternatively, when the processing speed changes, the speed range in which the changed processing speed is located is determined. Then, the required air flow rate is acquired based on the mapping relationship between the speed range and the air flow rate of the air pump. After the required air flow rate is determined, the laser processing apparatus generates an air pump adjustment instruction based on the air pump configuration information and the required air flow rate, and outputs the air pump adjustment instruction to the air pump to adjust the air flow rate of the air pump to the required air flow rate, thereby matching the air flow rate of the air pump with the current processing speed, and ensuring that the air pump delivers an appropriate airflow for effective dust removal.

Referring to FIG. 5, in some embodiments of the present disclosure, the calculating a required air flow rate of the air pump based on at least one of a processing material, a processing speed, and a processing power in step S31 includes step S313.

In step S313, the current processing power and the current processing speed are acquired, and the required air flow rate is determined based on the mapping relationship between the current processing power and the air flow rate of the air pump, and the mapping relationship between the current processing speed and the air flow rate of the air pump.

In the embodiments, the processing power and the processing speed of the laser processing apparatus are comprehensively considered. In the embodiments, the required air flow rate of the air pump is comprehensively calculated based on the processing power and the processing speed during a same processing stage. For example, a first air flow rate is acquired based on the mapping relationship between the power range in which the processing power is located and the air flow rate of the air pump, and a second air flow rate is acquired based on the mapping relationship between the speed range in which the processing speed during the same processing stage is located and the air flow rate of the air pump. A larger one of the first air flow rate and the second air flow rate is determined as the required air flow rate, and the air flow rate of the air pump is adjusted to the required air flow rate. Alternatively, the required air flow rate is acquired by calculating an average of the first air flow rate and the second air flow rate, or through another calculating relationship. In some embodiments, a calculating logic (such as a functional relationship) for acquiring the required air flow rate through the processing power and the processing speed is established, and the required air flow rate that is matched with the processing power and the processing speed is determined through the calculating logic, which is not limited herein. In the functional relationship, the processing power and the processing speed are independent variables, and the required air flow rate is a dependent variable. After the processing power and the processing speed are determined, the required air flow rate is determined.

Referring to FIG. 5, in some embodiments of the present disclosure, the calculating a required air flow rate of the air pump based on at least one of a processing material, a processing speed, and a processing power in step S31 includes step S314.

In step S314, the required air flow rate is determined based on a mapping relationship between the processing material and the air flow rate of the air pump.

It can be understood that, for different processing materials, the amount of the generated dust differs during laser processing, and the adhesion strength of the generated dust also differs. In some embodiments, the laser processing apparatus determines the required air flow rate based on a type of the processing material, and then generates an air pump adjustment instruction based on the air pump configuration information and the required air flow rate, and outputs the air pump adjustment instruction to the air pump to adjust the air flow rate of the air pump to the required air flow rate, thereby enabling the air pump to deliver an appropriate air flow rate for dust removal based on different processing materials.

In some embodiments, a mapping relationship between the processing material and the operating level of the air pump is established, such that each operating level corresponds to at least one type of the processing material. In addition, in some embodiments, the air flow rate of the air pump is determined based on material properties. For example, the processing task information transmitted from the host computer to the laser processing apparatus includes various material property parameters such as hardness and melting point of the to-be-processed material, and the required air flow rate is determined based on one or at least two of the material property parameters.

Referring to FIG. 5, in some embodiments of the present disclosure, the calculating a required air flow rate of the air pump based on at least one of a processing material, a processing speed, and a processing power in step S31 includes step S315.

In step S315, at least one operating parameter among the current processing power and the current processing speed is acquired, and the required air flow rate is determined based on the mapping relationship between the processing material and the air flow rate of the air pump, and the mapping relationship between the acquired operating parameter and the air flow rate of the air pump.

In some embodiments, the laser processing apparatus adjusts the air flow rate of the air pump based on the processing material and at least one operating parameter among the processing power and the processing speed. That is, the required air flow rate is determined based on the processing material and at least one processing parameter. In some embodiments, an air-flow-rate range of the air flow rate of the air pump is set based on the type of the processing material or the property of the processing material. Thus, in a case that the laser processing apparatus determines the processing material, the air-flow-rate range is selected based on the type of the processing material or the property of the material, and the required air flow rate is determined within the selected air-flow-rate range based on the at least one operating parameter among the processing power and the processing speed during processing. The air flow rate of the air pump is adjusted to the required air flow rate by the air pump based on the air pump configuration information. For a method of determining the required air flow rate based on at least one of the processing power and the processing speed during processing, reference is made to the mapping method described in the above embodiments, which will not be repeated here. By comprehensively considering the processing material and the at least one operating parameter among the processing power and the processing speed during processing, the air flow rate of the air pump can be accurately matched with an actual operating condition, thereby effectively enhancing the air assistance of the air pump.

In some embodiments of the present disclosure, in a case of different processing materials, a mapping relationship between a processing parameter (at least one of the processing power and the processing speed) and the required air flow rate varies. Thus, the processing material is first acquired, and then the mapping relationship, corresponding to the processing material, between the processing parameter and the required air flow rate is acquired. The required air flow rate of the air pump is calculated based on the mapping relationship and the processing parameter.

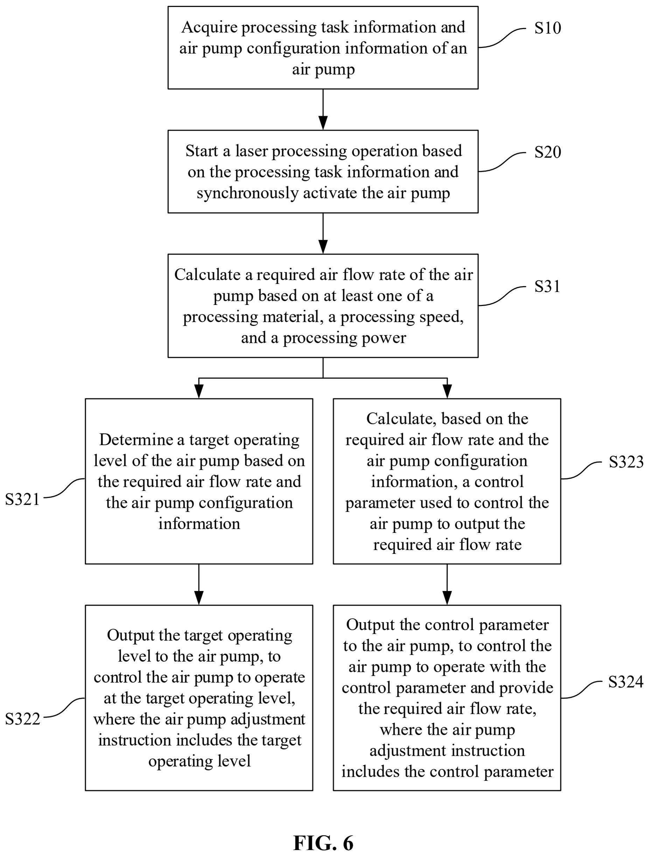

Referring to FIG. 6, in some embodiments of the present disclosure, the air pump configuration information at least includes an operating level of the air pump and an air flow rate corresponding to the operating level. The outputting the air pump adjustment instruction to the air pump based on the required air flow rate and the air pump configuration information, to adjust the air flow rate of the air pump in step S32 includes the following steps S321 to S322.

In step S321, a target operating level of the air pump is determined based on the required air flow rate and the air pump configuration information.

In step S322, the target operating level is outputted to the air pump, to control the air pump to operate at the target operating level, and the air pump adjustment instruction includes the target operating level.

In some embodiments, the operating level of the air pump is set in advance and the air flow rate of the air pump corresponding to the operating level is set, that is, a mapping relationship between the operating level of the air pump and the air flow rate of the air pump is established. During laser processing, the air pump operates at the determined target operating level, and the air flow rate of the air pump is adjusted to the required air flow rate without continuous adjustment of a piston movement stroke, a rotational speed of a crankshaft, a power supply frequency of an air pump motor, and a power supply voltage of the air pump, facilitating the control operation.

In some embodiments, after the laser processing apparatus determines the required air flow rate of the air pump based on at least one of the processing material and the operating parameter included in the processing task information, the target operating level corresponding to the required air flow rate is determined based on the mapping relationship between the operating level of the air pump and the air flow rate of the air pump, and the air pump adjustment instruction including the target operating level information is transmitted to the air pump, to control the air pump to operate at the target operating level, thereby adjusting the air flow rate of the air pump to the required air flow rate.

In some embodiments, the air pump configuration information is configured based on the type of the air pump without modification or update. Alternatively, the air pump configuration information is configured based on the processing task information and the type of the selected air pump, to satisfy the actual processing condition.

Referring to FIG. 6, in some embodiments of the present disclosure, the adjusting the air flow rate of the air pump based on the required air flow rate and the air pump configuration information in step S32 includes the following steps S323 to S324.

In step S323, a control parameter used to control the air pump to output the required air flow rate is calculated based on the required air flow rate and the air pump configuration information.

In step S324, the control parameter is outputted to the air pump, to control the air pump to operate with the control parameter and provide the required air flow rate, and the air pump adjustment instruction includes the control parameter.

In some embodiments, after the required air flow rate of the air pump is determined based on at least one of the processing material and the operating parameter included in the processing task information, the laser processing apparatus calculates a control parameter based on the required air flow rate and the air pump configuration information of the air pump, where the control parameter is used to control the air pump to adjust the air flow rate of the air pump to the required air flow rate. The control parameter includes a power supply voltage, a power supply frequency, and a duty cycle of the air pump motor. The laser processing apparatus transmits the air pump adjustment instruction including the control parameter to the air pump, to control the air pump to operate with the control parameter, thereby adjusting the air flow rate of the air pump to the required air flow rate. In this way, the air pump can output any required air flow rate within a specified range, accurately matching the air flow rate of the air pump with the amount of the generated dust.

Referring to FIG. 1, a laser processing system 100 is further provided according to the present disclosure. The laser processing system 100 includes a laser processing apparatus 1 and an air pump 2. The laser processing apparatus 1 includes an air supply channel connected to the air pump 2. The air pump 2 is communicatively connected to the laser processing system 100. The laser processing apparatus 1 is configured to perform the control method for the laser processing apparatus 1 according to any one of embodiments described above, to output the air pump adjustment instruction to the air pump 2. The air pump 2 adjusts the air flow rate based on the air pump adjustment instruction.

The laser processing apparatus 1 may be, but is not limited to, a laser engraving machine, a laser cutting machine, a laser marking machine, a laser welding machine, and the like. The laser processing apparatus 1 executes a processing task based on processing task information. The processing task information includes a processing material, a processing pattern, a processing start time instant, a processing end time instant, a processing power, a processing speed, and the like. The processing pattern only includes a processing contour, or includes an engraving depth, a thickness of a cut material, and the like. In a same laser processing task, both laser cutting and laser engraving are simultaneously included. The processing power and the processing speed are specific values or numerical ranges. The processing power and the processing speed are determined based on the processing material and the processing pattern, or are set and adjusted based on user requirements. The processing task information is directly preconfigured in the laser processing apparatus 1, or transmitted to the laser processing apparatus 1 by a host computer 3, or downloaded from a server 4 to the laser processing apparatus 1.

Air pump configuration information includes a correspondence between the air flow rate of the air pump and at least one parameter such as an operating power of the air pump 2, a piston stroke of the air pump 2, and a rotational speed of a crankshaft, or includes a mapping relationship between an operating level of the air pump 2 and the air flow rate of the air pump 2, that is, the air flow rate of the air pump corresponding to the operating level is set in advance. The air pump configuration information is directly preconfigured in the laser processing apparatus 1, or transmitted to the laser processing apparatus 1 by the host computer 3, or downloaded from the server 4 to the laser processing apparatus 1.

The air pump 2 is configured with both air extraction and air exhaust functions. An air exhaust port of the air pump 2 is connected to the air supply channel in the laser processing apparatus 1. An air outlet end of the air supply channel is arranged adjacent to a laser-emitting head, to blow air towards an area aligned with the laser-emitting head. Alternatively, in some embodiments, the air supply channel is communicated with a laser-emitting path, to blow airflow outward directly from a laser-output port. The air pump 2 is communicatively connected to the laser processing apparatus 1 via a wired connection or a wireless connection, for example, a Bluetooth connection or a connection manner that both the air pump 2 and the laser processing apparatus 1 are connected to a same local area network, enabling signal transmission between the air pump 2 and the laser processing apparatus 1, and allowing the laser processing apparatus 1 to transmit a control instruction to the air pump 2.

The laser processing system 100 according to the present disclosure is configured to perform the control method according to all the above-described embodiments, and thus has all the beneficial effects brought by all the above-described technical solutions, which are not described in detail herein.

Referring to FIG. 1, in some embodiments, the laser processing system 100 further includes a host computer 3. The host computer 3 is communicatively connected to the laser processing apparatus 1. The host computer 3 acquires the air pump configuration information, and transmits the air pump configuration information and the processing task information to the laser processing apparatus 1.

In some embodiments, the laser processing system 100 includes the host computer 3. The host computer 3 is configured to transmit the processing task information and the air pump configuration information to the laser processing apparatus 1. The host computer 3 is a terminal device such as a mobile phone, a computer, or a tablet. The host computer 3 is provided with host computer software for receiving or preconfiguring the laser processing task and the air pump configuration information. In some embodiments, the host computer 3 is configured to monitor a laser processing operation, an operating state of the air pump 2, and the like, which is not limited herein. In some embodiments, the host computer 3 is communicatively connected to the laser processing apparatus 1 via a wired connection through a signal wire, or via a wireless connection by using Bluetooth or by connecting to the same local area network, enabling the host computer 3 to transmit the laser processing task information, the air pump configuration information, and the like to the laser processing apparatus 1. In some embodiments, the laser processing apparatus 1 transmits actual processing information to the host computer 3 only for feedback and storage.

The processing task information and the air pump configuration information in the host computer 3 are directly configured in the host computer 3 by a user, or automatically generated by software. The processing task information and the air pump configuration information are further modified in the host computer 3. In some embodiments, the host computer 3 acquires the air pump configuration information from the server 4, which is not limited here.

Referring to FIG. 1, in some embodiments, the laser processing system 100 further includes a server 4. The server 4 is communicatively connected to the host computer 3. The host computer 3 transmits identification information of the air pump 2 to the server 4. The server 4 transmits the air pump configuration information to the host computer 3.

In some embodiments, the laser processing system 100 further includes the server 4. The server 4 is configured to store data, such as an apparatus parameter of the laser processing apparatus 1, a processing parameter, and a configuration parameter of the air pump 2. The host computer 3 acquires required data information from the server 4, or uploads the data information to the server 4 for storage. To acquire the air pump configuration information, the host computer 3 uploads the identification information of the air pump 2 to the server 4, and the server 4 provides the air pump configuration information that is matched with the identification information and transmits the matched air pump configuration information to the host computer 3, enabling the host computer 3 to transmit the matched air pump configuration information to the laser processing apparatus 1.

In some embodiments, after receiving the air pump configuration information, the host computer 3 acquires, in response to receiving a modification instruction for the air pump configuration information, modified air pump configuration information, transmits the modified air pump configuration information to the laser processing apparatus 1, and synchronously uploads the configuration information to the server 4.

In the embodiments, if a difference exists between preset configuration information in the server 4 and actual required air pump configuration information, the preset air pump configuration information downloaded in a slave computer is modified. For example, due to a variation in the actual processing environment of the laser processing system 100, such as a variation in at least one factor among temperature, humidity, air pressure, and ventilation degree of the processing environment, the degree of dust dispersion and dust adhesion force on the laser mirror surface vary, and thus the processing environment affects the air-blowing effect of the air pump 2. Alternatively, when the air pump configuration information completely matched with the current actual processing material or processing pattern is unavailable in the server 4, the host computer 3 only synchronizes similar air pump configuration information or an air pump configuration information template. In this case, the preset parameter of the air pump 2 downloaded in the slave computer should be modified based on the actual processing environment and/or parameters such as the actual processing material or pattern, to meet current actual requirements. For example, the number of operating levels and the air flow rate of the air pump corresponding to each operating level are set based on actual requirements, and then the modified air pump configuration information is transmitted to the laser processing apparatus 1 for synchronization, such that the laser processing apparatus 1 adjusts the operating level of the air pump 2 based on the required air pump configuration information and the processing task information.

In some embodiments, after the air pump configuration information is modified based on actual processing requirements to acquire the modified air pump configuration information adapted to the current processing condition and processing requirement, the host computer 3 uploads the modified air pump configuration information to the server 4 for storage. In this way, the air pump configuration information corresponding to the processing condition and processing requirement is recorded, enabling the invocation of the air pump configuration information when encountering the identical processing condition and processing requirement in subsequent operations, avoiding repeated modifications, and enhancing control convenience.

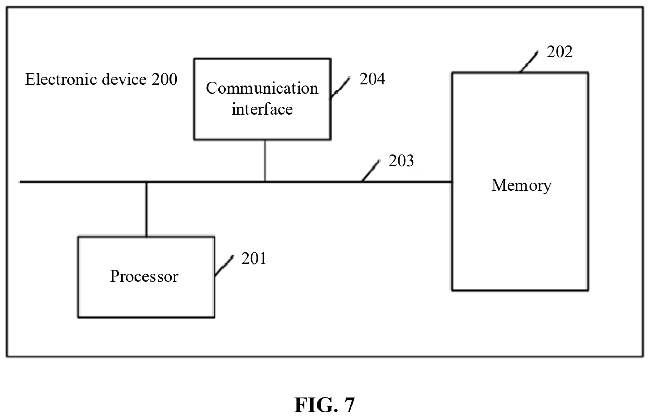

A laser processing device is further provided according to the present disclosure. Referring to FIG. 7, FIG. 7 is a schematic structural diagram of a laser processing device according to the present disclosure. As shown in FIG. 7, the laser processing device 200 includes a processor 201, a memory 202, a bus 203, and a communication interface 204. The processor 201, the memory 202, and the communication interface 204 are connected to each other through the bus 203. The memory 202 is configured to store a computer program. The processor 201 is configured to invoke the computer program stored in the memory 202 through the bus 203 to perform the control method described above.

In the present disclosure, the laser processing device 200 is a device such as a laser engraving machine, a laser cutting machine, or a laser welding machine, which is not limited herein. It can be understood that, for the specific implementation of the laser processing device 200 according to the embodiments of the present disclosure, reference is made to the related description of the above-described control method embodiments, which is not described in detail here. In some embodiments, the laser processing device 200 further includes a host computer installed with laser processing software, such as a computer, a mobile phone, and a tablet.

A computer-readable storage medium is further provided according to the present disclosure. The computer-readable storage medium stores a computer program. The computer program is executed by a processor to perform the control method for a laser processing apparatus according to any one of the embodiments described above.

The above descriptions are only preferred embodiments of the present disclosure, and are not intended to limit the protection scope of the present disclosure. Any equivalent structural changes or direct/indirect application in other related technical fields based on the specification and drawings of the present disclosure without departing from the concept of the present disclosure is included in the protection scope of the present disclosure.

## Claims

1. A control method for a laser processing apparatus, comprising:
acquiring processing task information and air pump configuration information of an air pump;
starting a laser processing operation based on the processing task information and synchronously activating the air pump; and
outputting an air pump adjustment instruction to the air pump based on the processing task information and the air pump configuration information, to adjust an air flow rate of the air pump during laser processing.

2. The control method for a laser processing apparatus according to claim 1, wherein the processing task information comprises at least one of a processing pattern, a processing material, a processing speed, and a processing power, and
wherein the outputting an air pump adjustment instruction to the air pump based on the processing task information and the air pump configuration information, to adjust an air flow rate of the air pump during laser processing comprises:
calculating a required air flow rate of the air pump based on at least one of the processing material, the processing speed, and the processing power; and
outputting the air pump adjustment instruction to the air pump based on the required air flow rate and the air pump configuration information, to adjust the air flow rate of the air pump.

3. The control method for a laser processing apparatus according to claim 2, wherein the calculating a required air flow rate of the air pump based on at least one of the processing material, the processing speed, and the processing power comprises:
acquiring a current processing power, and determining the required air flow rate based on a mapping relationship between the current processing power and the air flow rate of the air pump.

4. The control method for a laser processing apparatus according to any one of claims 1 to 3, wherein the air pump configuration information at least comprises an operating level of the air pump and an air flow rate of the air pump corresponding to the operating level, and
wherein the outputting the air pump adjustment instruction to the air pump based on the required air flow rate and the air pump configuration information, to adjust the air flow rate of the air pump comprises:
determining a target operating level of the air pump based on the required air flow rate and the air pump configuration information; and
outputting the air pump adjustment instruction comprising the target operating level to the air pump to control the air pump to switch to the target operating level, to adjust the air flow rate of the air pump.

5. The control method for a laser processing apparatus according to claim 2, wherein the outputting an air pump adjustment instruction to the air pump based on the processing task information and the air pump configuration information, to adjust an air flow rate of the air pump comprises:
calculating, based on the required air flow rate and the air pump configuration information, a control parameter used to control the air pump to output the required air flow rate; and
outputting the air pump adjustment instruction comprising the control parameter to the air pump, to control the air pump to adjust the air flow rate of the air pump based on the control parameter.

6. The control method for a laser processing apparatus according to claim 1, wherein the acquiring processing task information and air pump configuration information of an air pump comprises:
preconfiguring the processing task information and the air pump configuration information in the laser processing apparatus; or
transmitting, by a host computer, the processing task information and the air pump configuration information to the laser processing apparatus; or
downloading the processing task information and the air pump configuration information from a server to the laser processing apparatus.

7. The control method for a laser processing apparatus according to claim 3, wherein the acquiring a current processing power and a current processing speed, and determining the required air flow rate based on a mapping relationship between the current processing power and the air flow rate of the air pump, and a mapping relationship between the current processing speed and the air flow rate of the air pump comprises:
acquiring a first air flow rate based on a mapping relationship between a power range in which the current processing power is located and the air flow rate of the air pump;
acquiring a second air flow rate based on a mapping relationship between a speed range in which the current processing speed is located and the air flow rate of the air pump; and
determining a larger one of the first air flow rate and the second air flow rate as the required air flow rate, or determining an average of the first air flow rate and the second air flow rate as the required air flow rate, and adjusting the air flow rate of the air pump to the required air flow rate.

8. The control method for a laser processing apparatus according to claim 2, further comprising:
pre-establishing a mapping relationship between the processing task information and the required air flow rate;
determining the required air flow rate based on a current operating mode and the mapping relationship; and
outputting the air pump adjustment instruction to the air pump based on the required air flow rate and the air pump configuration information, to adjust the air flow rate of the air pump during laser processing.

9. The control method for a laser processing apparatus according to claim 8, wherein the operating mode comprises a cutting mode and an engraving mode, a first mapping relationship between the processing task information and the required air flow rate is pre-established for the cutting mode, and a second mapping relationship between the processing task information and the required air flow rate is pre-established for the engraving mode, and
wherein the determining the required air flow rate based on a current operating mode and the mapping relationship comprises:
in response to the current operating mode being the cutting mode, determining a first required air flow rate corresponding to the processing task information based on the first mapping relationship, generating the air pump adjustment instruction based on the first required air flow rate, and transmitting the air pump adjustment instruction to the air pump, to control the air pump to output an air flow rate equal to or greater than the first required air flow rate; and
in response to the current operating mode being the engraving mode, determining a second required air flow rate corresponding to the processing task information based on the second mapping relationship, generating the air pump adjustment instruction based on the second required air flow rate, and transmitting the air pump adjustment instruction to the air pump, to control the air pump to output an air flow rate equal to or greater than the second required air flow rate.

10. The control method for a laser processing apparatus according to claim 8 or 9, wherein the air pump configuration information at least comprises an operating level of the air pump and an air flow rate of the air pump corresponding to the operating level, and
wherein the outputting the air pump adjustment instruction to the air pump based on the required air flow rate and the air pump configuration information, to adjust the air flow rate of the air pump comprises:
determining a target operating level of the air pump based on the required air flow rate and the air pump configuration information; and
outputting the air pump adjustment instruction comprising the target operating level to the air pump to control the air pump to switch to the target operating level, to adjust the air flow rate of the air pump.

11. The control method for a laser processing apparatus according to claim 2, wherein the calculating a required air flow rate of the air pump based on at least one of the processing material, the processing speed, and the processing power comprises:
acquiring a current processing speed, and determining the required air flow rate based on a mapping relationship between the current processing speed and the air flow rate of the air pump.

12. The control method for a laser processing apparatus according to claim 2, wherein the calculating a required air flow rate of the air pump based on at least one of the processing material, the processing speed, and the processing power comprises:
acquiring a current processing power and a current processing speed, and determining the required air flow rate based on a mapping relationship between the current processing power and the air flow rate of the air pump, and a mapping relationship between the current processing speed and the air flow rate of the air pump.

13. The control method for a laser processing apparatus according to claim 2, wherein the calculating a required air flow rate of the air pump based on at least one of the processing material, the processing speed, and the processing power comprises:
determining the required air flow rate based on a mapping relationship between the processing material and the air flow rate of the air pump.

14. The control method for a laser processing apparatus according to claim 2, wherein the calculating a required air flow rate of the air pump based on at least one of the processing material, the processing speed, and the processing power comprises:
acquiring a current processing power and a current processing speed, and determining the required air flow rate based on a mapping relationship between the current processing power and the air flow rate of the air pump, a mapping relationship between the current processing speed and the air flow rate of the air pump, and a mapping relationship between the processing material and the air flow rate of the air pump.

15. A laser processing system, comprising a laser processing apparatus and an air pump, wherein the laser processing apparatus comprises an air supply channel connected to the air pump, the air pump is communicatively connected to the laser processing apparatus, the laser processing apparatus is configured to perform the control method for the laser processing apparatus according to any one of claims 1 to 14 to output the air pump adjustment instruction to the air pump, and the air pump adjusts the air flow rate based on the air pump adjustment instruction.

16. The laser processing system according to claim 15, wherein the laser processing system further comprises a host computer, wherein the host computer is communicatively connected to the laser processing apparatus, and the host computer acquires the air pump configuration information and transmits the air pump configuration information and the processing task information to the laser processing apparatus.

17. The laser processing system according to claim 15, wherein the laser processing system further comprises a server, wherein the server is communicatively connected to a host computer, the host computer transmits identification information of the air pump to the server, and the server transmits the air pump configuration information to the host computer.

18. The laser processing system according to claim 16, wherein after receiving the air pump configuration information, the host computer acquires, in response to receiving a modification instruction for the air pump configuration information, modified air pump configuration information, transmits the modified air pump configuration information to the laser processing apparatus, and synchronously uploads the modified air pump configuration information to a server.

19. A control method for a laser processing system, wherein the laser processing system comprises a laser processing apparatus, and the control method comprises:
during laser processing, performing, by the laser processing apparatus, processing based on processing task information, and synchronously outputting an air pump adjustment instruction to an air pump based on air pump configuration information of the air pump to synchronously adjust an air flow rate of the air pump.

20. The control method for a laser processing system according to claim 19, wherein the processing task information and the air pump configuration information are directly preconfigured in the laser processing apparatus, or the processing task information and the air pump configuration information are transmitted to the laser processing apparatus by a host computer, or the processing task information and the air pump configuration information are downloaded from a server to the laser processing apparatus.

21. The control method for a laser processing system according to claim 19, wherein the processing task information comprises at least one of a processing pattern, a processing material, a processing speed, and a processing power, and the air pump adjustment instruction is acquired by:
calculating a required air flow rate of the air pump based on at least one of the processing material, the processing speed, and the processing power; and
outputting the air pump adjustment instruction based on the required air flow rate and the air pump configuration information.

22. The control method for a laser processing system according to claim 21, wherein the calculating a required air flow rate of the air pump based on at least one of the processing material, the processing speed, and the processing power comprises:
acquiring a current processing power, and determining the required air flow rate based on a mapping relationship between the current processing power and the air flow rate of the air pump.

23. The control method for a laser processing system according to claim 22, wherein the air pump configuration information at least comprises an operating level of the air pump and an air flow rate of the air pump corresponding to the operating level, and
wherein the outputting the air pump adjustment instruction to the air pump based on the required air flow rate and the air pump configuration information, to adjust the air flow rate of the air pump comprises:
determining a target operating level of the air pump based on the required air flow rate and the air pump configuration information; and
outputting the air pump adjustment instruction comprising the target operating level to the air pump to control the air pump to switch to the target operating level, to adjust the air flow rate of the air pump.

24. The control method for a laser processing system according to claim 22, wherein the acquiring a current processing power and a current processing speed, and determining the required air flow rate based on a mapping relationship between the current processing power and the air flow rate of the air pump, and a mapping relationship between the current processing speed and the air flow rate of the air pump comprises:
acquiring a first air flow rate based on a mapping relationship between a power range in which the current processing power is located and the air flow rate of the air pump;
acquiring a second air flow rate based on a mapping relationship between a speed range in which the current processing speed is located and the air flow rate of the air pump; and
determining a larger one of the first air flow rate and the second air flow rate as the required air flow rate, or determining an average of the first air flow rate and the second air flow rate as the required air flow rate, and adjusting the air flow rate of the air pump to the required air flow rate.

25. The control method for a laser processing system according to claim 21, wherein the calculating a required air flow rate of the air pump based on at least one of the processing material, the processing speed, and the processing power comprises:
acquiring a current processing speed, and determining the required air flow rate based on a mapping relationship between the current processing speed and the air flow rate of the air pump.

26. The control method for a laser processing system according to claim 21, wherein the calculating a required air flow rate of the air pump based on at least one of the processing material, the processing speed, and the processing power comprises:
acquiring a current processing power and a current processing speed, and determining the required air flow rate based on a mapping relationship between the current processing power and the air flow rate of the air pump, and a mapping relationship between the current processing speed and the air flow rate of the air pump.

27. The control method for a laser processing system according to claim 21, wherein the calculating a required air flow rate of the air pump based on at least one of the processing material, the processing speed, and the processing power comprises:
determining the required air flow rate based on a mapping relationship between the processing material and the air flow rate of the air pump.

28. The control method for a laser processing system according to claim 21, wherein the calculating a required air flow rate of the air pump based on at least one of the processing material, the processing speed, and the processing power comprises:
acquiring a current processing power and a current processing speed, and determining the required air flow rate based on a mapping relationship between the current processing power and the air flow rate of the air pump, a mapping relationship between the current processing speed and the air flow rate of the air pump, and a mapping relationship between the processing material and the air flow rate of the air pump.

29. A computer-readable storage medium, storing a computer program, wherein the computer program is executed by a processor to perform the control method for a laser processing apparatus according to any one of claims 1 to 14.

30. A laser processing device, comprising at least one processor and a memory, wherein the at least one processor is configured to process a computer program stored in the memory, to perform the control method for a laser processing apparatus according to any one of claims 1 to 14.
